(19) Europäisches Patentamt
European Patent Office
Office européen des brevets

(11) **EP 3 163 136 A1**

(12) **EUROPEAN PATENT APPLICATION**

(43) Date of publication:
**03.05.2017 Bulletin 2017/18**

(51) Int Cl.:
*F16K 1/42* (2006.01)          *F16K 1/54* (2006.01)
*F16K 3/24* (2006.01)          *F16K 3/34* (2006.01)

(21) Application number: **15191688.9**

(22) Date of filing: **27.10.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **IMI Hydronic Engineering International
SA
1262 Eysins (CH)**

(72) Inventors:
• **ENGELBREKTSSON, Anders
SE-504 34 BORÅS (SE)**
• **JÖNSSON, Anders
SE-520 24 BLIDSBERG (SE)**

(74) Representative: **Awapatent AB
P.O. Box 11394
404 28 Göteborg (SE)**

(54) **A CONTROL VALVE**

(57)     The present inventive concept is related to a control valve comprising a valve body, a chamber arranged inside the valve body, a fluid inlet, a fluid outlet, and a closing arrangement for regulating the flow of fluid from the fluid inlet to the fluid outlet via the chamber. The closing arrangement has a closed state in which no fluid, or only a leakage flow, is allowed to flow through the chamber, a first open state in which fluid is allowed to flow through the chamber, and at least one second open state in which a lower flow of fluid is allowed to flow through the chamber compared to when the closing arrangement is in its first open state. Between the closed state and the second open state, the closing arrangement is configured to allow fluid to flow through the chamber in accordance with a first valve characteristic function. Between the second open state and the first open state, the closing arrangement is configured to allow fluid to flow through the chamber in accordance with a second valve characteristic function being different compared to the first valve characteristic function.

Fig. 5A

## Description

Technical field of the Invention

The present inventive concept relates to a control valve having a valve characteristic defined by at least two different valve characteristic functions. The inventive concept also relates to a valve-actuator arrangement and to a fluid distribution system comprising a control valve and/or a valve-actuator arrangement.

Background of the Invention

Fluid distribution systems, for e.g. heating, cooling and water supply are designed to feed a fluid from a source to a consumption point. Each consumption point typically has a calculated and designed flow or differential pressure requirement. However, depending on the type of hydronic system, the flow requirement is often variable over time and can change with factors like seasonality (e.g. summer or winter), that changes the load from the consumption points, temperature changes of the system fluid, changes in consumption of the system fluid (e.g. for drinking water).

Control valves are frequently used in fluid distribution systems and have a variable opening such that the flow rates can be controlled. Hereby, the flow fed to the consumption point may be varied in an effective manner.

A control valve typically controls the flow by a closing arrangement, the closing arrangement comprising a closing member and a closing member receiving portion arranged to receive the closing member. The closing member may e.g. be a valve rod and a valve plug and the closing member receiving portion a valve seat.

The control valve can be arranged in a closed state where no fluid, or only a leakage flow, is allowed to flow through the closing arrangement, and in at least one open state where fluid is allowed to flow through the closing arrangement. In the closed state, the closing member is typically positioned to be in contact, such as in a sealing contact, with the closing member receiving portion.

While the control valves is beneficial for obtaining varying flows in the fluid distribution system, they have the drawback of that the maximum valve capacity (or valve factor), often needs to be varied (e.g. the maximum flow allowed through the valve often needs to be varied). This may e.g. be carried out by reducing the cross sectional area through which the fluid is flowing through the valve, for example by a so called lift limitation (for a valve having e.g. a closing arrangement with a valve plug-valve seat arrangement) which limits the movement of the valve plug within the valve. When performing a lift limitation of a control valve, the valve characteristic is typically changed, and the available maximum control of the valve plug is no longer used. For certain types of control valves, when being subject to a lift limitation, the control of fluid through the control valve is impaired. In other words, the modified valve characteristic of the lift limited control valve, i.e. the valve characteristic being modified as compared to the control valve being subject to no lift limitation, has be changed in an undesired way.

Thus, it would be desirable to provide a control valve which can better adapt to a lift limitation.

Summary of the Invention

An object of the present inventive concept is to provide a control valve controlling flow through the control valve in accordance with at least two different valve characteristic functions, and which at least partly alleviates the above mentioned drawbacks of existing valves. This and other objects, which will become apparent in the following, are accomplished by a control valve as defined in the accompanying claims.

The present inventive concept is based on the insight that a control valve can be configured in such a way that a fluid may flow through the control valve in accordance with at least two different valve characteristic functions.

According to a first aspect of the present inventive concept, there is provided a control valve for controlling fluid flow. The control valve comprises:

a valve body, a chamber arranged inside said valve body, a fluid inlet for providing fluid to said chamber, and a fluid outlet for receiving fluid from said chamber, and a closing arrangement for regulating the flow of fluid from said fluid inlet to said fluid outlet via said chamber,

said closing arrangement having a closed state in which no fluid, or only a leakage flow, is allowed to flow through said chamber, a first open state in which fluid is allowed to flow through said chamber, and at least one second open state in which a lower flow of fluid is allowed to flow through said chamber compared to when said closing arrangement is in its first open state,

wherein

between said closed state and said second open state, said closing arrangement is configured to allow fluid to flow through said chamber in accordance with a first valve characteristic function, and

between said second open state and said first open state, said closing arrangement is configured to allow fluid to flow through said chamber in accordance with a second valve characteristic function being different compared to said first valve characteristic function.

Hereby, the closing arrangement provides the function of allowing fluid flow through the control valve in accordance with at least a first and a second valve characteristic functions. Hence, a control valve which may be better adapted for a lift limitation is provided. For example, by adapting the first and second valve characteristic functions, the control valve may be able to control flow in a desired manner regardless of the control valve is being subject to a lift limitation or not.

In other words, the valve characteristic of the control valve of the present inventive concept is at least defined by a first valve characteristic function and a second valve characteristic function being different from the first valve characteristic function.

By having the closing arrangement being configured to allow fluid to flow through said chamber in accordance with two different valve characteristic functions, there is no need to have such function in e.g. an actuator controlling the control valve. Thus, the actuator may be a simple, linear actuator, as the function of allowing fluid to flow through said chamber in accordance with two different valve characteristic functions is correlated to the configuration of the closing arrangement

According to at least one example embodiment, said second open state may be referred to as an intermediate open state, or as a first intermediate open state, as the second open state is a state being intermediate of the closed state and the first state.

According to at least one example embodiment, said first valve characteristic function and said second valve characteristic function are defined by, or are at least partly defined by, the shape of the closing arrangement.

According to at least one example embodiment, said closing arrangement comprises a closing member and a closing member receiving means having at least a closing member receiving portion,

wherein said closing member is adapted to be moved away from said closing member receiving portion thereby providing a flow-through section through which fluid is allowed to flow,

wherein, in said closed state, said closing member is arranged in a closed position in which said closing member is in sealing contact with said closing member receiving portion in order to allow no fluid, or only a leakage flow, to flow via said closing arrangement, and in said first open state, said closing member is arranged in a first open position in which said closing member is distant from said closing member receiving portion, and in said second open state, said closing member is arranged in a second open position in which closing member is less distant from said closing member receiving portion compared to when said closing member is in its first open position.

Hereby, the states of the closing arrangement are correlated to the position of the closing member. The closing member may e.g. distance itself from the closing member receiving portion by being lifted away from the closing member receiving portion (such as e.g. a control valve where the closing member comprises a valve plug connected to a valve rod which can be moved away, or lifted, from a valve seat) or the closing member may e.g. distance from the closing member receiving portion by being rotated relative the closing member receiving portion (such as e.g. a rotating valve where the closing member comprises e.g. a ball plug which can be moved away, or rotated, from the closing member receiving portion).

The cross sectional area of the flow-through section may thus vary depending on the position of the closing member. In the first open state, the cross sectional area of the flow-through section may be referred to as a first open flow-through area. In the second open state, the cross sectional area of the flow-through section may be referred to as a second open flow-through area. Correspondingly, the second open flow-through area is smaller than the first open flow-through area.

The cross sectional area of the flow-through section is according to at least one example embodiment defined as the minimum flow through area via the closing arrangement for each position of the closing member. If there is more than one flow-through section, e.g. two flow-through sections, the cross sectional area of the flow-through sections will be the combined cross sectional area, such as the combined respective minimum cross sectional area of the two flow-through sections.

It should be noted that the valve characteristic is correlated to the flow-through section(s) and its (combined) cross sectional area. The valve characteristic may be defined as the relation obtained between the fluid flow through the valve and the position of the closing member at constant differential pressure, for example by the relation between the valve capacity (or valve factor) Kv and the position of the closing member. The fluid flow through the valve is in turn directly correlated to the cross sectional area of the flow-through section(s). Thus, the valve characteristic may be defined as the relation between the cross sectional area of the flow-through section(s) and the position of the closing member.

According to at least one example embodiment, said first valve characteristic function is defined as a first function f1 (X)=Y and said second valve characteristic function is defined as a second function f2(X)=Y, wherein X is the position of the closing member, e.g. defined by the distance of said closing member compared to said closing member receiving portion, and Y is the cross sectional area of said flow-through section(s), and wherein the derivate of said first function df1 (X)/dY is different compared to the derivate of said second function df2(X)/dY over at least a majority of distance X.

Hence, two subsequent positional changes of the same size and in the same direction of the closing member, anywhere between the closed position and the second open position, will result in an increase or a decrease of the cross sectional area of the flow-through section(s) (depending on direction of the closing member motion), and hence the fluid flow, in accordance with the first valve characteristic function. Correspondingly, two subsequent positional changes of the same size and in the same direction of the closing member, anywhere between the second open position and the first open position, will result in an increase or a decrease of the cross sectional area of the flow-through section(s), and hence the fluid flow, in accordance with the second valve characteristic function.

It should be understood that by stating that the derivate of the first function df1 (X)/dY is different compared to the derivate of the second function df2(X)/dY over at least a majority of distance X, the above is true for at least a majority of the positions or positional changes for the closing member (i.e. over a majority of the distances between the closing member and the closing member receiving portion). Thus, there may be some positional changes of the closing member where the derivate of the first function df1 (X)/dY is equal to the derivate of the second function df2(X)/dY. However, for a majority of the positions or positional changes of the closing member, the derivate of the respective functions are different. It should also be noted that X=0 is defining the closing member in its closed position.

According to at least one example embodiment, the derivate of said second function df2(X)/dY is greater compared to the derivate of said first function df1 (X)/dY over at least a majority of distance X.

In other words, by comparing a first positional change of the closing member when the closing arrangement is controlling fluid through the chamber in accordance with the first function, with a second positional change of the closing member when the closing arrangement is controlling fluid through the chamber in accordance with the second function, the first positional change and the second positional change being equal in size as well as in direction, the second positional change will lead to a greater change in cross sectional area of the flow-through section(s) and hence a greater change in fluid flow compared to the first positional change.

According to at least one example embodiment, the derivate of the second function df2(X)/dY is greater compared to the derivate of the first function df1 (X)/dY except for where the first function intersects with the second function. Thus, according to at least one example embodiment, a transition of the first function to the second function is smooth. However, according to at least one example embodiment, the derivate of the second function is greater compared to the derivate of the first function. That is, over the whole distance X.

According to at least one example embodiment, said second function is linear. According to at least one example embodiment, said second function is essentially linear. According to at least one example embodiment, said second function has a more linear shape compared to the first function.

Hence, two subsequent positional changes of the same size and in the same direction of the closing member, anywhere between the second open position and the first open position, will result in two equal (or substantially equal) changes of cross sectional area of the flow-through section(s) and hence two equal (or substantially equal) changes of fluid flow through flow-through section(s). The two subsequently occurring equal changes of the cross sectional area of the flow-through section(s) and the fluid flow will follow the second function, i.e. the second valve characteristic function.

According to at least one example embodiment, said first function is curved e.g. by being defined by an EQM function. The EQM function may be defined as:

$$Y\ [\%] = 100 {*} a/(100/X{-}1{+}a)$$

where X is the position of the closing member expressed in percentage of its maximum position (Xmax), a is a variable correlated to the shape of the function, and Y is the cross sectional area of the flow-through section(s) expressed in percentage of the valves respective maximum cross sectional area of the flow-through section(s) (Ymax), that is either for the valve when being subject to a restriction of the closing member (e.g. a lift limitation) or not (e.g. no lift limitation).

It should be understood that a change of said closing member position (X) anywhere between its closed position and its second open position results in a change of cross sectional area of the flow-through section(s) (Y). The fluid flow through said chamber is turn depending on the fluid flow through the flow-through section(s) which in turn is depending on the size, i.e. the cross sectional area, of the flow-through section(s). Thus, between the closed position and the second open position, the change in cross sectional area of the flow-through section(s) in relation to the position of the closing member, is in accordance with the first valve characteristic function.

Correspondingly, it should be understood that a change of said closing member position (X) anywhere between its second open position and its first open position results in a change of cross sectional area of the flow-through section(s) (Y). The fluid flow through said chamber is in turn depending on the fluid flow through the flow-through section(s) which in turn is depending on the size, i.e. the cross sectional area, of the flow-through section(s). Thus, between the second open position and the first open position, the change in cross sectional area of the flow-through section(s) in relation to the position of the closing member, is in accordance with the second valve characteristic function.

It should also be noted that the valve characteristic is often defined as the relationship between the valve capacity (or valve factor) Kv and the position of the closing member, such as e.g. the lift of the closing member (often referred to as h). The valve capacity Kv is depending on the flow through the valve which in turn is depending on the cross sectional area of the flow-through section(s). Kv may be described as a pressure correlated flow through the valve. In other words Kv specifies the volume of fluid (in m3) flowing through the valve during one hour (h) i.e. flow of fluid, q (m3/h) at a pressure drop (ΔP) across the valve. For example, Kv can be defined as:

$$Kv = q/(\Delta P/ra)^{1/2}$$

where ra (kg/m$^3$) is the density of the fluid. Alternatively, the pressure drop in the above definition is multiplied with the constant 1000 if the unit of the pressure drop is expressed in bars. However, the definition of the valve capacity may vary for different countries. For example in the US, the valve capacity is often denoted Cv and may be defined as:

$$Cv = Kv/0.86.$$

Thus, it should be noted that the first and second functions described above, may as well be used with Y being defined by Kv (or alternatively the fluid flow), as the cross sectional area of the flow-through section(s), the fluid flow through the flow-through section(s), as well as Kv are all correlated to each other and vary in a similar manner. Correspondingly, the valve characteristic may be defined as a relationship between the position of the closing member (i.e. X) and Kv or the cross sectional area of the flow-through section(s) (i.e. Y). Thus, the first valve characteristic function and the second valve characteristic function may together make up, at least at part of, the valve characteristic.

According to at least one example embodiment, said first function is an EQM function with parameter a between 0.1 and 0.8, or more preferably between 0.2 and 0.6, or more preferably between 0.2 and 0.4, or approximately 0.23-0.29. According to at least one example embodiment, said first function is an EQM function with parameter a equal to approximately 0.27.

Hence, two subsequent positional changes of the same size and in the same direction of the closing member, anywhere between the closed position and the second open position, will result in two different changes of cross sectional area of the flow-through section(s) and hence two different changes of fluid flow through flow-through section(s). The two subsequently occurring different changes of the cross sectional area of the flow-through section(s) (and the fluid flow) will follow the first function, i.e. the first valve characteristic function.

According to at least one example embodiment, said closing member is a valve plug connected to a valve rod, and said closing member receiving portion is a valve seat adapted to receive said valve plug and be in sealingly contact with said valve plug when said valve plug is in said closed position in order to allow no fluid, or only a leakage flow, to flow via said closing arrangement.

According to at least one example embodiment, said first valve characteristic function and said second valve characteristic function are defined by, or are at least partly defined by, the shape of the valve plug and/or the valve seat.

Hence, according to at least one example embodiment, the valve plug is shaped in such a way that changes of the cross sectional area of the flow-through section(s) and hence the fluid flow through the chamber, are depending on the position and positional changes of the valve plug, in accordance with said first valve characteristic function and/or said second valve characteristic function.

According to at least one example embodiment, the valve seat is shaped in such a way that changes of the cross sectional area of the flow-through section(s) and hence the fluid flow through the chamber, are depending on the position and positional changes of the valve plug, in accordance with said first valve characteristic function and/or said second valve characteristic function.

According to at least one example embodiment, the valve plug and the valve seat are together shaped in such a way that changes of the cross sectional area of the flow-through section(s) and hence the fluid flow through the chamber, are depending on the position and the positional changes of the valve plug, in accordance with said first valve characteristic function and/or said second valve characteristic function.

It should be understood that in the closed state, the valve plug and the valve seat may be sealing contact allowing no fluid to flow through the chamber. For example, if the valve plug and/or the valve seat are made in a soft material, there may be no leakage flow pass the valve plug as the sealing properties of the valve plug and valve seat are sufficient for this. However, if the valve plug and the valve seat are each made of a hard material, e.g. both being made in metal, there may be a leakage flow pass the valve plug and through the chamber. For example, the leakage flow may be defined as being within 0.1 % of the maximum flow or design flow.

According to at least one example embodiment, said valve plug is arranged to be guided inside at least a part of said chamber, and wherein said valve plug comprises a controlling portion, said controlling portion being arranged to control fluid flow through said flow-through section.

Hence, according to at least one embodiment, the controlling portion is the portion of the valve plug which is arranged to first encounter the fluid flow from the fluid inlet. According to at least one example embodiment, the controlling portion is the portion of the valve plug which is arranged furthest upstream in the valve. Thus, the controlling portion may e.g. be a flat portion, such as an underside of the valve plug.

Hence at least a portion of the controlling portion may be arranged to mate with the vale seat in the closed state of the closing arrangement.

The distance X described previously may for example be, for each position of the valve plug, the shortest distance from the controlling portion of the valve plug to the valve seat (e.g. in the z-direction as defined later in the application).

According to at least one example embodiment, said chamber comprises a proximal chamber surface and a distal chamber surface being opposite to said proximal chamber surface, and said closing member receiving means further comprises a valve insert arranged at least partly inside said chamber, said valve insert comprising a proximal portion and at least two distal portions, wherein said valve plug is adapted to be guided through at least a part of said valve insert, and

at least one of said distal portions of said valve insert is resiliently arranged relative said proximal portion in order for the distal portions to be movable relative each other.

Thus, the relative movement of the at least two distal portions can, at least partly, make up for manufacturing tolerances of internal components in the valve. For example, and according to at least one example embodiment, the distal portions is arranged to at least partly encompass the valve plug. Hereby, the valve becomes less sensitive to a valve plug which is made larger than the designed size, as the distal portions can be moved relative each other and thereby adapt to the larger size of the valve plug. Correspondingly, if the valve plug is made smaller than the designed size, the distal portions can be moved relative each other and thereby adapt to the smaller size of the valve plug. Hence, in other words, the distal portions can make up for manufacturing tolerances of the valve plug. Furthermore, the valve insert can according to some embodiments make up for manufacturing tolerances in the size of the chamber.

It should be noted that the at least one resiliently arranged distal portion is resiliently arranged relative the proximal portion. Hence the at least one resiliently arranged distal portion may be moved relative the proximal portion and thereby also be moved relative the other distal portion(s), the other distal portion(s) may, or may not be, resiliently arranged relative the proximal portion.

In a cylindrical coordinate system ($\rho$, $\varphi$, z), the valve insert has an extension in the circumferential direction $\varphi$ (corresponding to a direction of the angle of the angular coordinate $\varphi$), an extension in the radial direction $\rho$, and an extension in a direction being perpendicular to both the circumferential direction $\varphi$ and the radial direction $\rho$ corresponding a z-direction along the height z.

The valve seat may e.g. be comprised in the valve body downstream of the fluid inlet, such as e.g. be comprised in the distal chamber surface, or the valve seat may e.g. be comprised in the valve insert. For example, the at least two distal portions may at least partly make up, or be comprised in, said valve seat.

It should be noted that each distal portion is preferably associated with a gap in the circumferential direction. Hence, as the valve insert comprises at least two distal portions, at least two gaps preferably separate the at least two distal portions. For embodiments having more distal portions, such as e.g. three distal portions, the three distal portions are preferably separated by three gaps.

According to at least one example embodiment, each one of said distal portions comprises a characteristic controlling portion having a varying height in circumferential direction of said valve insert.

According to at least one example embodiment, each one of the characteristic controlling portions is varying in height from a an end sub-portion being adjacent to the respective gap separating the distal portions, towards the respective connecting leg of the distal portions.

According to at least one example embodiment, each one of the characteristic controlling portions is curved from the end sub-portion (where the respective characteristic controlling portion has it smallest height) towards the respective connecting leg of the distal portions. The curve may for example be sharp near the end sub-portion, and relatively more flat towards the respective connecting leg. The curve may for example be shaped such that the resulting valve characteristic is EQM-shaped when fluid flows pass the characteristic controlling portions. The curve may alternatively be described as being logarithmically-shaped.

According to at least one example embodiment, the extension of the characteristic controlling portion of each one of distal portion in the z-direction is at least partly continuously varying in the circumferential direction.

According to at least one example embodiment, the characteristic controlling portions at least partly define the valve characteristic by the first function.

According to at least one example embodiment, said characteristic controlling portions is first characteristic controlling portions, and each one of said distal portions comprises a second characteristic controlling portion formed as a step.

According to at least one example embodiment, each one of the second characteristic controlling portions is varying in height in a step-shaped manner from the respective first characteristic control portion (where the respective second characteristic controlling portion has it smallest height) towards the respective connecting leg of the distal portions.

In other words, the extension of the second characteristic controlling portion of each one of the distal portions in the z-direction is at least partly varying in a step in the circumferential direction.

According to at least one example embodiment, the second characteristic controlling portions at least partly define the valve characteristic by a second function.

Thus, a valve insert having distal portions comprising first and second characteristic controlling portions, provide for the possibility of having a valve characteristic be defined by at least two different valve characteristic functions. Hereby the valve can be used with different lift limitations (or no lift limitation) and still provide a good enough valve characteristic.

According to at least one example embodiment, said valve seat comprises a characteristic controlling portion having a varying height in a circumferential direction of said valve seat.

As mentioned above, the valve seat may e.g. be comprised in the valve body, such as in the distal chamber surface.

Hence, the characteristic controlling portions, such as the first characteristic controlling portions, may instead of being comprised in the valve insert be comprised in the valve seat e.g. in embodiments having no valve insert. The effects and features related to the valve characteristic of having the characteristic controlling portions comprised in the valve seat are similar or the same as those mentioned above in relation to the valve insert and are not repeated here. Embodiments mentioned in relation to the characteristic controlling portions of the valve insert are largely compatible with the characteristic controlling portion of the valve seat.

According to at least one example embodiment, said characteristic controlling portion (of the valve seat) is a first characteristic controlling portion (of the valve seat), and said valve seat comprises a second characteristic controlling portion formed as a step.

Again, the effects and features related to the valve characteristic of having the second characteristic controlling portions comprised in the valve seat are similar or the same as those mentioned above in relation to the valve insert and are not repeated here. Embodiments mentioned in relation to the second characteristic controlling portions of the valve insert are largely compatible with the second characteristic controlling portion of the valve seat.

According to at least one example embodiment, said valve plug comprises first and/or second characteristic controlling portions. Thus, the valve plug may have a cut-out section with a varying height in a circumferential direction of the valve plug and/or have a cut-out section being formed as a step.

According to at least one example embodiment, when said valve plug is positioned between its closed position and its second open position, said valve plug allows fluid flow through said chamber and through said valve insert over said first characteristic controlling portions, and wherein a change of said valve plug position anywhere between its closed position and its second position results in a change of fluid flow through said chamber, and in a change of cross sectional area of the flow-through section(s), in accordance with said first valve characteristic function.

According to at least one example embodiment, when said valve plug is positioned between its second open position and its first open position, said valve plug allows fluid flow through said chamber over said first and said second characteristic controlling portions, and wherein a change of said valve plug position anywhere between its second open position and its first open position results in a change of fluid flow through said chamber, and in a change of cross sectional area of the flow-through section(s), in accordance with said second valve characteristic function.

According to at least one example embodiment, the control valve comprises a lift limitation means for enabling lift limitation of the control valve. The lift limitation may e.g. comprise a screw nut arrangement, wherein the nut is arranged inside chamber and is configured to act as a stop for the valve plug. Furthermore, the screw may be adapted to alter the position of the nut within the chamber relative the valve plug. Thus, by adapting the position of the nut, different heights (such as in the z-direction) of where the valve plug stops against the nut may be provided. Hence, if the valve is to be subject to a lift limitation resulting in e.g. 40 % (as compared to the respective maximum) of the cross sectional area of the flow-through section(s) or the Kv-value, the screw is operated such that the nut is positioned inside the chamber relative the valve plug in such a way that the valve plug may not be moved above a position where the resulting cross sectional area of the flow-through section(s) or the Kv-value is above 40 % of its (non lift-limited) value.

According to at least a second aspect of the present inventive concept, a valve-actuator arrangement is provided. The valve-actuator comprises a control valve in accordance with the first aspect of the present inventive concept, and an actuator adapted to control the movement of the closing arrangement of the control valve.

According to at least one example embodiment, the actuator is adapted to control the movement of the closing member, such as e.g. the movement of the valve plug.

According to at least one example embodiment, the actuator controls the movement of the closing arrangement, such as the movement of the closing member (e.g. the valve plug) in accordance with an actuator characteristic. The actuator characteristic may be defined by the relationship of the actuator input signal (typically a certain voltage) and the actuator induced position, or positional change, of the closing arrangement, such as the actuator induced position, or positional change, of the closing member (e.g. the valve plug). For example, the actuator characteristic may be defined as the actuators induced lift h of the valve plug as a function of the actuator input signal u. According to at least one example embodiment, the actuator characteristic is linear. According to at least one example embodiment, the actuator comprises an actuator spindle being in an operatively connected to the valve rod of the control valve.

According to at least a third aspect of the present inventive concept, a fluid distribution system is provided. The fluid distribution system may comprise a control valve in accordance with the first aspect of the present inventive concept and/or a valve-actuator arrangement in accordance with the second aspect of the present inventive concept.

It should be understood that said fluid inlet may be arranged for providing/guiding fluid into the control valve, and that said fluid outlet may be arranged for guiding fluid out from said control valve. In the fluid distribution system in which the control valve is installed, the fluid outlet is preferably fluidly connected to a consumption point, such as e.g. a cooling unit or a heating unit, arranged downstream of the valve in the fluid distribution system. Hence, according to at least one example embodiment, the fluid distribution system comprises a heating unit or a cooling unit. Furthermore, upstream of the valve the fluid inlet is preferably fluidly connected to a fluid source. Hence, according to at least one example embodiment, the fluid distribution system comprises a fluid source.

Brief description of the drawings

Fig. 1 is a schematic illustration of a system comprising a control valve and a valve-actuator arrangement according to at least one example embodiment of the invention.

Fig. 2 is a graph illustrating different valve characteristics following the EQM function for different values of the parameter a.

Fig. 3 is a graph illustrating the valve characteristic for a control valve being subject to different degrees of lift limitation.

Figs. 4a-4b are cross-sectional views of a valve showing different positions of the valve plug according to at least one example embodiment of the invention.

Figs. 5a-5b are illustrating parts of the valve in Figs. 4a-4b in greater detail according to at least one example embodiment of the invention.

Fig. 6 is a graph illustrating the valve characteristic for a control valve being subject to different degrees of lift limitation according to at least one example embodiment of the invention.

Detailed description of the drawings

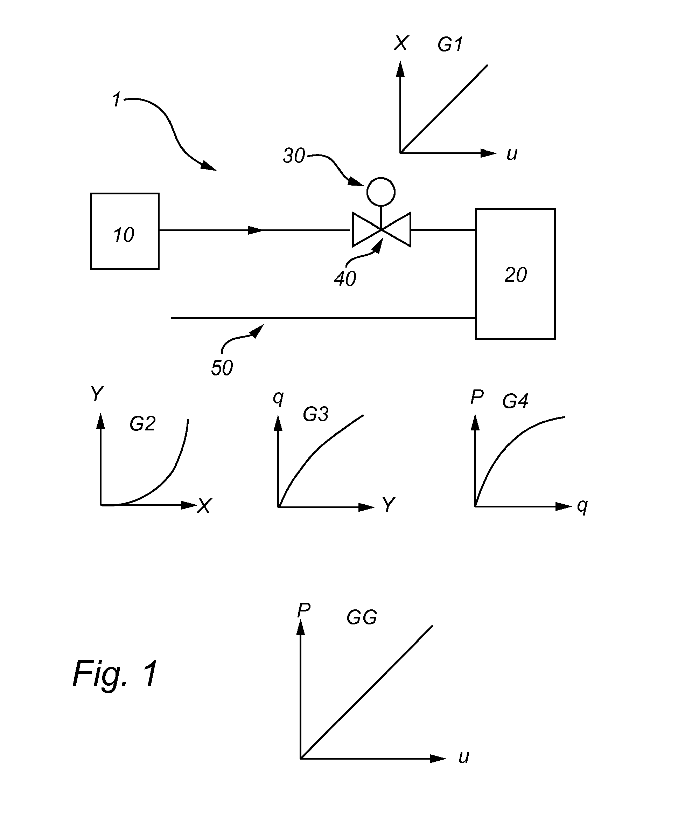

Fig. 1 illustrates a fluid distribution system 1 which could be used e.g. for heating, cooling or water supply. The system 1 is designed to feed a fluid from a source 10 to a consumption point, here illustrated as a cooling unit 20 (but the consumption point could alternatively be comprised of a heater or a consumption water arrangement). Hence, the system 1 in Fig. 1 is configured for cooling e.g. a room in a building with the aid of the cooling unit 20. Furthermore, the system 1 comprises an actuator 30, a control valve 40 being controlled by the actuator 30, and piping 50 arranged to guide the fluid and to connect the source 10 with cooling unit 20 via the control valve 40, and to transfer the fluid away from the cooling unit 20.

The above mentioned components and units of the system 1 (possibly except for the source 10) is associated with a specific characteristic, i.e. the behaviour of the component/unit which is often described as a relationship between two parameters. The actuator has an actuator characteristic defined by the influence of the actuator input signal (typically a certain voltage) on the actuator's control of the valve such as the position or positional change of a valve plug in the valve. For example, the actuator characteristic may be defined as the actuator induced position X of a closing member of the valve (e.g. the induced lift h of a valve plug inside the valve) as a function of the actuator input signal u. The actuator characteristic may be linear as indicated in the graph G1 next to the actuator 30 in Fig. 1.

Correspondingly, the control valve 40 has a control valve characteristic defined by the actuator induced position X of the closing member of the valve (as mentioned above, this is typically related to the lift h of the valve rod/valve plug inside the valve) as a function of the cross sectional area of the flow-through section(s) Y (which is further explained below). The cross sectional area of the flow-through section(s) may be replaced by the valve capacity Kv as they are correlated.

It should be noted that for valves which do not vary its cross sectional area of the flow-through section(s) (i.e. its opening degree) by a lifting principle, e.g. a rotating valve or a ball valve, the maximum flow through the valve may be limited by another principle than lifting the valve plug, such as e.g. by rotation of the closing member.

The EQM function can be defined as:

$$Y\ [\%] = 100^*a/(100/X-1+a)$$

where X is the position of the closing member expressed in percentage of its maximum position (Xmax), a is a variable correlated to the shape of the function, and Y is the cross sectional area of the flow-through section(s) expressed in percentage of the valves respective maximum cross sectional area of the flow-through section(s) (Ymax), that is either for the valve when being subject to a restriction of the closing member (e.g. a lift limitation) or not (e.g. no lift limitation).

In Fig. 1, the control valve characteristic is indicated in the graph G2.

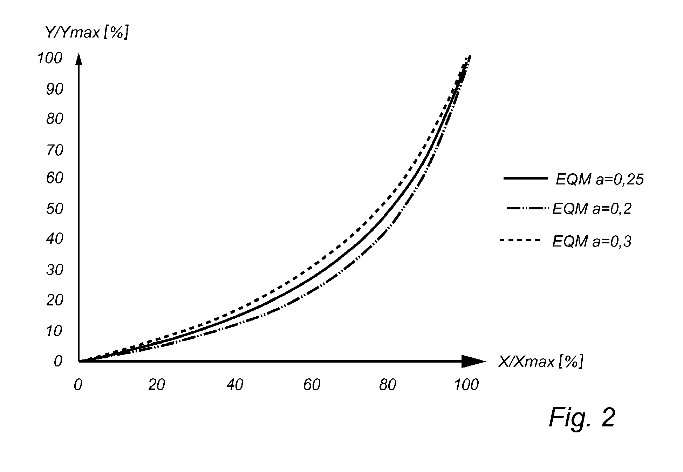

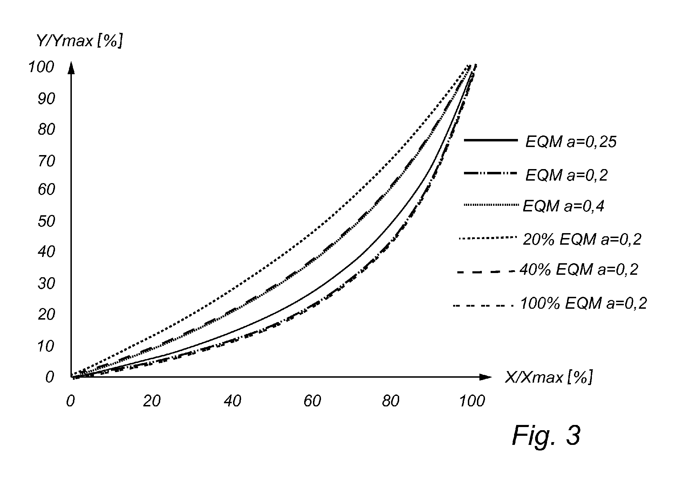

In Fig. 2, different valve characteristic following the EQM function for different values of the parameter a is shown. The x-axis in the graph of Fig. 2 is normalized with regards to the position of the closing member, X/Xmax where X is the position of the closing member and Xmax is the position of the closing member corresponding to a fully open valve (restricted or non-restricted), i.e. with maximum opening degree. Correspondingly, the y-axis in the graph of Fig. 3 represents Y/Ymax where Y is the cross sectional area of the flow-through section(s) and Ymax is the respective cross sectional area of the flow-through section(s) when the valve is fully open (i.e. at its respective maximum opening degree, either for the valve where the closing member is subject to a restriction, e.g. by being lift limited, or for the valve where the closing member is not subject to a restriction, e.g. not being lift limited). In Fig. 2, a dash-dotted curve is defined by the EQM function and having parameter a=0.2, a dotted curve is defined by the EQM function and having parameter a=0.3, and a solid line curve is defined by the EQM function and having parameter a=0.25. From a control point perspective, it is preferable if the valve characteristic of a control valve lies within the curve of a=0.2 and the curve of a=0.3. However, it is generally accepted if the valve characteristic is within the curve of a=0.2 and a curve corresponding to the EQM function with parameter a=0.4, or at least close to these two curves.

Turning back to Fig. 1, the fluid flow in the different components/units and in the piping 50 connecting e.g. the source 10 with the control valve 40, and the control valve 40 with the cooling unit 20, typically varies depending on pressure differences e.g. stemming from part-load operation of the system 1. This behaviour of the fluid flow in the system 1 can be described as a hydronic piping characteristic defined by the fluid flow q as a function of the cross sectional area of the flow-through section(s) in the control valve, or of the valve capacity Kv. The hydronic piping characteristic may be slightly curved as indicated in the graph G3 of Fig. 1.

Furthermore, the cooling unit 20 has a cooling unit characteristic defined by its output effect P as a function of the fluid flow q. The cooling unit characteristic may have a curved function, such as a logarithmically-shaped function as indicated in the graph G4 next to the cooling unit 20 in Fig. 1.

As mentioned above, if the system is for heating instead, the cooling unit 20 will be replaced with a heating unit having a corresponding heating unit characteristic.

As illustrated in Fig. 1, the behaviour of the components/units of the system 1 shown in the four graphs G1-G4 can be added together into a single global graph GG which aims to describe the global/overall behaviour of the system 1 in a global circuit characteristic. Hence, the global circuit characteristic of the global graph GG is defined by the output effect P of the cooling unit 20 as a function of the actuator input signal u.

It should be noted that the above mentioned discussion concerning the behaviour of the components/units of the system 1 with their respective characteristic is an attempt to described the physically phenomena occurring in the system 1 in a simplified manner. Naturally, the characteristic of the respective components/units is often not as precise as indicated in Fig. 1 and the discussion herein may be considered as a simplified theoretical explanation.

However, despite the differences between the above simplified/theoretical discussion and the true/actual behaviour of the system 1, a target of the present inventive concept is to achieve, or come as close a possible to, a linear global circuit characteristic as indicated in the global graph GG. Thus, the components/units of the system 1 can be changed or modified in order to adapt the respective characteristic to achieve a linear global circuit characteristic. However, the ease of changing or modifying the different components/units of the system 1 (and thereby changing or modifying the respective characteristic of the components/units) may vary. For example, when setting up or installing the system 1 in e.g. a building, the cooling unit 20 is typically chosen depending on the cooling demand, and the cooling unit characteristic is typically based on this cooling demand and is not easily changed or modified.

Furthermore, there may be reasons for not actively modifying or changing the actuator 30 from a linear actuator characteristic, with the aim of achieving a linear global circuit characteristic. For example, as the actuator 30 typically operates in a stepwise manner (at least to some degree) a non-linear actuator characteristic may result in an relatively unresponsive characteristic compared to a linear actuator characteristic. This effect may be even more pronounced for an actuator 30 controlling a valve 40 being subject to a lift limitation. Thus, according to at least one example embodiment, the actuator characteristic as defined above, is linear.

Hence, at least for the reasons discussed above, and according to at least one example embodiment, the control valve is a modified control valve having a valve characteristic adapted to achieve a linear global characteristic. By having a linear global characteristic, relatively steep slopes of the characteristic is avoided and the risk of instability in the system, e.g. when regulating the control valve to adapt for a part-load operation, is reduced.

In many installations, the control valve is adapted to the requirements of the system in which it is installed, and hence the maximum fluid flow through the control valve is limited. For a valve which vary its opening degree by a lifting principle (such as e.g. a valve having valve plug and a valve seat), the control valve may typically be subject to a lift limitation. Hence, the movement of the valve rod and the corresponding maximum distance of the valve plug from the valve seat are limited. The lift limitation may e.g. be set at 40 % indicating that the maximum limited lift of the valve rod result in a cross sectional area of the flow-through section(s) of 40 % of its maximum (or a Kv-value of 40 % of its maximum) In other words, the valve rod may only be moved from a position corresponding to 0 % opening degree (i.e. from the closed position where the valve plug rests in the valve seat) to a position corresponding to an opening degree of 40 % of the maximum. For other types of valves, e.g. a rotating valve or a ball valve, the maximum cross sectional area of the flow-through section(s) or flow through the valve may be limited by other means, such as e.g. a limitation of how much the closing member may be rotated.

In Fig. 3, a graph illustrating the valve characteristic for a control valve being subject to different degrees of lift limitation is shown. The valve characteristic is of the control valve when not being subject to any lift limitation is following an EQM function with parameter a = 0.2. The double dotted curve (100% EQM a=0.2) represents such valve characteristic for a control valve having no lift limitation, the dashed curve (40% EQM a=0.2) represents a valve characteristic for the same control valve having a lift limitation resulting in 40 % of its maximum value as explained above, and the first dotted curve (20% EQM a=0.2) represents a valve characteristic for the same control valve having a lift limitation resulting in 20 % of its maximum value. For a more comprehensive illustration of the graph, the x-axis is normalized with regards to the position of the closing member, X/Xmax where X is the position of the closing member and Xmax is the position of the closing member corresponding to a fully open valve (restricted or non-restricted), i.e. with maximum opening degree (which as previously discussed could be replaced by h/hmax where h is the variable lift and hmax is the respective maximum lift of the control valve for a valve having a valve plug which can be lift limitated). That is, the x-axis in the graph of Fig. 3 represents X/Xmax where X may represent the variable lift h and Xmax may be the respective maximum lift hmax of the control valve, i.e. either the maximum limited lift (for the dashed and first dotted curves) or the maximum lift (for the double dotted curve). Correspondingly, the y-axis in the graph of Fig. 3 represents Y/Ymax where Y is the cross sectional area of the flow-through section(s) and Ymax is the respective cross section area of the flow-through section(s) when the valve is fully open (i.e. at its respective maximum opening degree, either for the valve where the closing member is subject to a restriction, e.g. by being lift limited, or for the valve where the closing member is not subject to a restriction, e.g. not being lift limited). Correspondingly, Y/Ymax can be replaced with Kv/Kvmax where Kv is valve capacity and Kvmax is the respective maximum valve capacity.

Furthermore, in the graph of Fig. 3, desired theoretical limitations of the where the valve characteristic preferably is located are shown by a dash dotted curve (EQM a=0.2) and a second dotted curve (EQM a=0.4). The dash dotted curve follows an EQM function with parameter a = 0.2 and the second dotted curve follows an EQM function with parameter a = 0.4. Preferably, for a manageable control of the control valve, e.g. when controlling the valve close to its closed state, the valve characteristic should be located in between the dash dotted curve and the second dotted curve or at least lie close to the dash dotted curve and/or the second dotted curve. In Fig. 3, a solid line curve (EQM a=0.25) follows and EQM function with parameter a = 0.25.

As shown in Fig. 3, the valve characteristic representing the control valve having a 20 % lift limitation is (far) on the undesired side of the second dotted curve. Hence, for a control valve having a valve characteristic following an EQM function behavior with parameter a = 0.2, which is subject to a lift limitation of 20 %, the valve characteristic is not desirable from a control operating perspective.

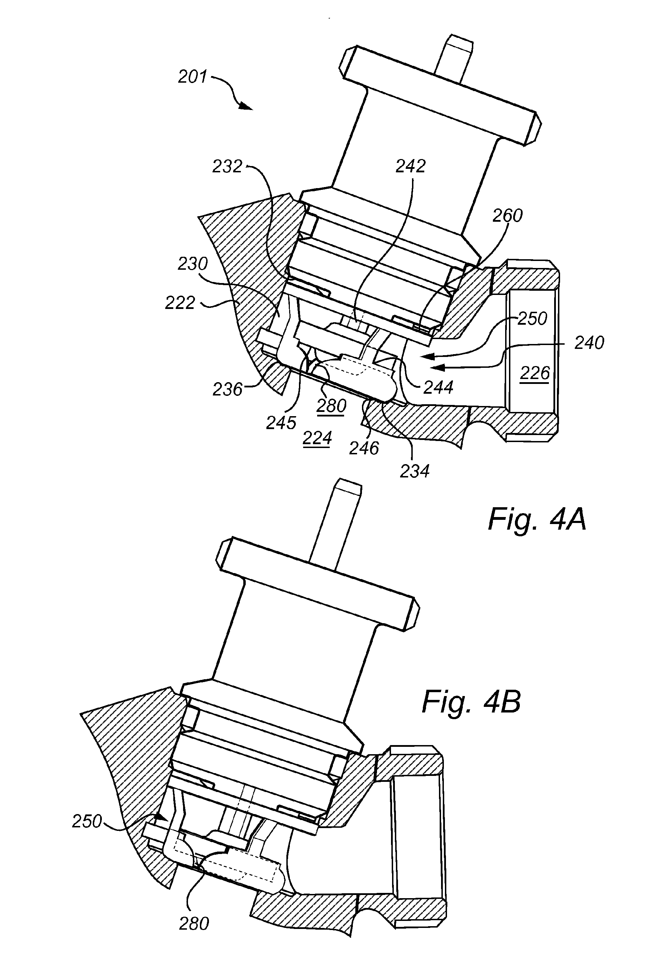

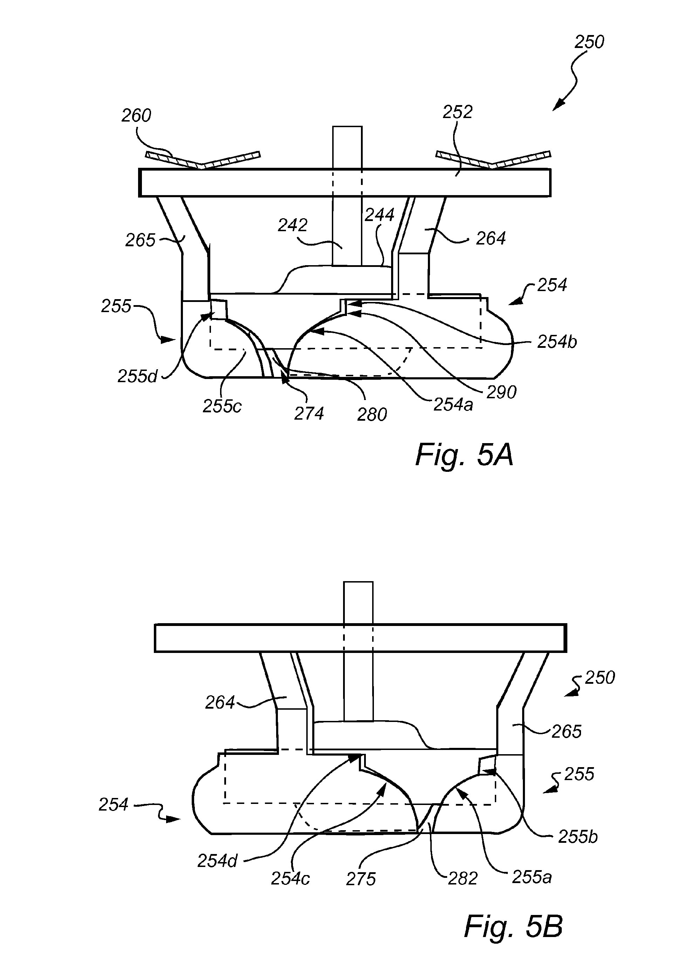

According to at least one example embodiment of the present inventive concept, the above mentioned problem is at least partly solved by providing a control valve having a closing arrangement which is designed in such a way that it provides at least two different valve characteristic functions. In Figs. 4a-4b, an example embodiment of a valve 201 having at least two different valve characteristic functions is shown. The inventive concept will now be described with reference to the valve 201 of Figs. 4a-4b and the valve parts of Figs. 5a-5b, where first attention will be drawn to the structure, and secondly to the function and the two different valve characteristic functions.

The valve 201 in Figs. 4a-4b comprises a valve body 222, a chamber 230 arranged inside the valve body 222, a fluid inlet 224 for providing fluid to the chamber 230 and a fluid outlet 226 for receiving fluid from the chamber 230. Thus, the valve 201 is configured to, in use, and when correctly installed in a fluid distribution system (as shown in Fig. 1), provide a fluid flow, such as a main fluid flow, from the fluid inlet 224 to the fluid outlet 226 via the chamber 230.

The chamber 230 in Figs. 4a-4b comprises a proximal chamber surface 232 and a distal chamber surface 234. The distal chamber surface 234 is arranged opposite to the proximal chamber surface 232. It should be understood that the distal chamber surface 234 and the proximal chamber surface 232 may be comprised in the valve body 222 and/or be comprised in other interior parts of the valve 201.

Furthermore, the valve 201 comprises a closing arrangement 240 having a closed state in which no fluid, or only a leakage flow, is allowed to flow through the chamber 230, a first open state in which fluid is allowed to flow through said chamber 230, and at least one second open state in which a lower flow of fluid is allowed to flow through the chamber 230 compared to when the closing arrangement 240 is in its first open state. The closing arrangement 240 comprises a closing member 244 in the form of a valve plug 244 attached to a valve rod 242, and a closing member receiving means comprising a closing member receiving portion 246 in the form of a valve seat 246, and a valve insert 250. The valve insert 250 is completely, or almost completely, arranged inside the chamber 230. The valve rod 242 is arranged at least partly inside the chamber 230, and is also arranged at least partly outside the chamber 230, and is extending into the chamber 230 through a plane extending in the proximal chamber surface 232. The valve plug 244 is connected to an end portion of the valve rod 242, and the valve rod 242 and the valve plug 244 is adapted to be moved inside the chamber 230 in a direction towards the valve seat 246 and in a direction away from the valve seat 246. The valve plug 244 is furthermore adapted to be moved inside of the valve insert 250. In other words, the valve insert 250 is adapted to at least partly guide the valve plug 244.

The closing arrangement 240 is adapted to control the fluid flow through the chamber 230. Herby, the valve insert 250 is arranged in the chamber 230 such that a fluid may flow from the fluid inlet 224 to the fluid outlet 226 via the valve insert 250. Thus, the position of the valve plug 244 inside of the valve insert 250 at least partly determines the flow of fluid from the valve inlet 224 to the valve outlet 226, this is further explained below.

The valve seat 246 may preferably be comprised in a portion of the valve body 222, and is preferably arranged radially internally of the valve insert 250. As seen in Figs. 4a-4b, the valve seat 246 may be arranged in the distal chamber surface 234. In a closed state of the valve 201, the valve plug 244 is arranged in a closed position in which the valve plug 244 is in contact with the valve seat 246.

The valve insert 250 in Figs. 4a-4b will now be described in greater detail with reference to Figs. 5a-5b showing enlarged views of the valve insert 250 of Figs. 4a-4b from two different perspectives. The valve insert 250 comprises a proximal portion 252, two distal portions 254, 255, that is a first distal portion 254 and a second distal portion 255, and two connecting legs 264, 265, each connecting leg 264, 265 connecting one of the distal portions 254, 255 to the proximal portion 252. However, it should be noted that the valve insert 250 could, according to at least one example embodiment comprise three distal portions, or even four or more distal portions. In Figs. 5a-5b, the two distal portions 254, 255 are similar or identical to each other, but are arranged in different positions in relation to the proximal portion 252. However, according to at least one example embodiment, at least one of the distal portions 254, 255 is different from at least one of the other distal portions 254, 255.

In a cylindrical coordinate system $(\rho, \varphi, z)$, the valve insert 250 has an extension in the circumferential direction $\varphi$ (corresponding to a direction of the angle of the angular coordinate $\varphi$), an extension in the radial direction $\rho$, and an extension in a direction being perpendicular to both the circumferential direction $\varphi$ and the radial direction $\rho$ corresponding a z-direction along the height z.

Each one of the distal portions 254, 255 has a main extension in the circumferential direction $\varphi$, an extension in the z-direction (corresponding to the height of each one of the distal portions 254, 255), and an extension in the radial direction (corresponding to the thickness of each one of the distal portions 254, 255). The height of each one of the distal portions 254, 255 in Figs. 5a-5b are varying. Furthermore, as each one of the distal portions 254, 255 are bevelled on a respective surface facing the distal chamber surface 234, the thickness of each one of the distal portions 254, 255 are varying. Each one of the distal portions 254, 255 is arranged as a circumferential segment, or as a ring-shaped segment, separated from the other distal portion 254, 255 by a respective small gap 274, 275. Alternatively, the two distal portions 254, 255 are in touching contact with each other.

The proximal portion 252 in Figs. 5a-5b has a main extension in the circumferential direction $\varphi$, an extension in the z-direction (corresponding to the height of proximal portion 252), and an extension in the radial direction (corresponding to the thickness of the proximal portion 252). The proximal portion 252 in Figs. 5a-5b is ring-shaped and is non-segmented, i.e. it is continuous in the circumferential direction.

As mentioned above, each one of the distal portions 254, 255 is connected to the proximal portion 250 by the respective connecting legs 264, 265. Thus, a first connecting leg 264 is connecting the proximal portion 252 with the first distal portion 254, and a second connecting leg 265 is connecting the proximal portion 252 with the second distal portion 255. Each one of the connecting legs 264, 265 is connected centrally to the respective distal portion 265, 255. Furthermore, each one of the distal portions 254, 255 is symmetrical along a section where each one of the distal portions 254, 255 is connected to the respective connecting leg 264, 265.

The valve 201 in Figs. 4a-4b and Figs. 5a-5b further comprises a spring 260 arranged between the proximal chamber surface 232 and the proximal portion 252 of the valve insert 250. The spring 260 may alternatively be a spring element 260 comprised in the proximal portion 252 of the valve insert 250.

At least one of the distal portions 254, 255 are resiliently arranged and are thus movable relative each other. For the valve insert 250, each one of the distal portions 254, 255 can be moved in the radial direction. For example, if the first distal portion 254 is moved in the radial direction towards a centreline of the valve insert 250, the gaps 274, 275 will be reduced and possibly eliminated, and the first distal portion 254 will be arranged closer to the second distal portion 255 as compared to before the movement. By a corresponding manner, the second distal portion 255 is movable in the radial direction towards the centreline of the valve insert 250. However, as mentioned above, not both of the distal portions 254, 255 need to be movable in the radial direction, as long as at least one of the distal portions 254, 255 is movable relative the other distal portion 254, 255. Additionally and/or alternatively, at least one of the distal portions 254, 255 may be movable in the radial direction away from the centreline of the valve insert 250 and may upon such movement increase the gaps 274, 275 and the distances from the other distal portion 254, 255.

It should be noted that the distal portions 254, 255 may be resiliently arranged relative each other by different means. In Figs. 4a-4b and Figs. 5a-5b, the distal portions 254, 255 are allowed to move relative each other as they are arranged separately from each other, at least in a $\rho, \varphi$-plane extending through the distal portions 254, 256 by the gaps 274, 275. Furthermore the configurations of the connecting legs 264, 265 allow for movement of the respective distal portion 254, 255. Hence, the valve insert 250 is preferably made in a material allowing for some resiliency, e.g. plastic or rubber or similar material. However, the whole valve insert 250 needs not to be made in a material allowing for some resiliency but parts or portions of the valve insert 250 may be made in a rigid, non-resilient material. For example, as long as at least one of the connecting legs 264, 265 is connected to the proximal portion 252 in such a way that the at least one connecting leg 264, 265 can be slightly tilted, and/or that at least one of the connecting legs 264, 265 is resiliently connected to the respective distal portion 254, 255, whereby the distal portions 254, 255 can be moved relative each other, the purpose of moving at least one distal portions 254, 255 relative the other distal portions 254, 255 is fulfilled. Thus, according to at least one example embodiment, at least the portion of at least one of the connecting legs 264, 265 connected to the proximal portion 252 is made in a material allowing resiliency, or alternatively, at least one of the connecting legs 264, 265 is hingely connected to the proximal portion 252 and/or the respective distal portion 254, 255.

It should be understood that the distal portions 254, 255 need to be separated by the gaps 274, 275 but may as well be connected to each other by some connecting means, as long as the connecting means allow for a relative movement between at least two of the distal portions 254, 255, e.g. by being a resilient connecting means. The resilient connecting means may be made in one piece with the respective distal portions 254, 255 and/or the whole of the respective distal portions 254, 255 may be made of a resilient material allowing the distal portions 254, 255 to be moved relative each other. Thus, according to at least one example embodiment, at least one of the distal portions 254, 255 is made of a resilient material allowing the at least one distal portion 254, 255 to be movable relative the other distal portions 254,255.

The function of the valve insert 250 will now be described in more detail. The distal portions 254, 255 are movable relative each other as they are resiliently arranged in the valve insert 250. Hence, in a first state, the distal portions 254, 255 may be moved towards each other, i.e. at least one of the distal portions 254, 255 may be moved closer to at least one of the other distal portions 254, 255, and in a second state at least one of the distal portions 254, 255 may be moved away from at least one of the other distal portions 254, 255.

As seen in Figs. 4a-4b, the valve insert 250 is compressed by the spring 260 between the spring 260 and the distal chamber surface 234. Thus, the spring 260 acts on the valve insert 250 by exerting a force in a direction from the proximal chamber surface 232 towards the distal chamber surface 234, i.e. a proximal-distal direction (for example in the z-direction).

Furthermore, a portion of the distal chamber surface 234 defines a receiving portion 236 for the valve insert 250, and more specifically for the distal portions 254, 255 of the valve insert 250. As seen in Figs. 4a-4b, the receiving portion 236 is bevelled or inclined in a direction at least partly extending from the chamber 230 towards the fluid inlet 224. Furthermore, a receiving portion facing surface (not shown) of each one of the distal portions 254, 255 is bevelled in order to correspond to said receiving portion 236. Hereby, the force exerted from the spring 260 to the valve insert 250 in the proximal-distal direction may be transferred to a radial force via the bevelled receiving portion 236 and the bevelled receiving portion facing surfaces. According to at least one example embodiment, the bevelled receiving portion 236 and the bevelled receiving portion facing surfaces allows the spring 260 to act on the valve insert 250 in such a way that the distal portions 254,255 are pushed towards each other. Hereby, the gaps 274, 275 between the distal portions 254, 255 may be reduced and become very small or alternatively be eliminated.

It should be noted that the seat 246 may be bevelled in a corresponding manner as the receiving portion 236 of the distal chamber surface 234. Hence, according to at least one example embodiment, the receiving portion 236 and the seat 246 are comprised in a common bevelled surface. However, according to at least one embodiment, the seat 246 and the receiving portion 236 is separated by a nob or protrusion which may act as a stop for the distal portions 254, 255 of the valve insert 250.

As shown in Figs. 4a-4b and 5a-5b, the dimensions of the valve plug 244 (at least the dimensions of the valve plug 244 in the radial direction) determines how much the distal portions 254, 255 are allowed to be moved radially inwards towards the centreline of the valve insert 250. In other words, as the spring 260 acts on the valve insert 250 in such a way that the distal portions 254, 255 are pushed towards each other, the valve plug 244 acts as a stop for the movement of the distal portions 254, 255. Hence, the distal portions 254, 255 will be pressed against the valve plug 244. This is advantageous as no flow, or a very low flow, will thereby be allowed to pass through and beyond the distal portions 254, 255 and the valve plug 244 in the z-direction. Hereby an undesired fluid flow passage in the z-direction between the valve insert 250 and the valve plug 244 may be avoided or at least reduced.

One main advantage of having resiliently arranged distal portions 254, 255, is that the valve 201 becomes more allowable for larger manufacturing tolerances related to e.g. the size of the valve seat 246 and/or the size and dimension of the valve plug 244 and/or size of the chamber 230 in where the valve inert 250 is arranged. In other words, one benefit of having resiliently arranged distal portions 254, 255 which can be pressed towards the valve plug 244 is that the valve plug 244 can be made with larger manufacturing tolerances. That is, as the distal portions 254, 255 are pressed against the valve plug 244, there is less need to have a precisely adapted size and dimension of the valve plug 244. Furthermore, the valve insert 250 may take up manufacturing tolerances of the chamber 230 and/or the position of the valve seat 246 as the valve insert 250 is compressed inside the chamber 230 by the spring 260.

The arrangement of the valve plug 244 and the distal portions 254, 255 provide flow-through sections 280, 282 where the fluid may flow through the valve insert 250. As the valve insert 250 here comprises two distal portions 254, 255, two flow-through sections 280, 282 are formed. The first flow-through section 280 is defined by a plane extending at least between a portion of the valve plug 244, a portion of the first distal portion 254 and a portion of the second distal portion 255. The second flow-through section 282 is defined by a plane extending between at least another portion of the valve plug 244, another portion of the first distal portion 254 and another portion of the second distal portion 255 and the second gap 275. The first gap 274 may, but do not have to, be comprised in the first flow-through section 280 according to one example embodiment, for such embodiment the first flow-through section 280 extends to the distal chamber surface 232. Correspondingly, the second gap 275 may, but do not have to, be comprised in the second flow-through section 282 according to one example embodiment, for such embodiment the second flow-through section 282 extends to the distal chamber surface 232.

The structure of the distal portions 254, 255 will now be explained in further detail with reference to Figs. 5a-5b, whereafter the first and second flow-through sections 280, 282 will be described further.

The two distal portions 254, 255 in Figs. 5a-5b are as mentioned above symmetrical along a section where they are connected to the respective connecting leg 264, 265. A first portion 254a of the first distal portion 254 is curved in the z-direction from the gap 274 towards the connecting leg 264. In other words, the height of the first portion 254a of the first distal portion 254 is varying, or is continuously varying. For example, the first portion 254a may be shaped to be relatively sharp close to the gap 274, and relatively flat closer to the connecting leg 264. A second portion 254b being adjacent to the first portion 254a of the first distal portion 254 is formed as a step 254b in the z-direction from the first portion 254a towards the connecting leg 264. The step 254 comprises a lateral side which is extending substantially in the z-direction, and a perpendicular side being perpendicular to the lateral side and having a constant height. Furthermore, as the first distal portion 254 is symmetrical, it comprises a third portion 254c arranged on an opposite side of the connecting leg 264 compared to the first portion 254a, the third portion 254c being mirrored but otherwise identical to the first portion 254a. However, according to at least one example embodiment, the third portion 254c is designed slightly different compared to the first portion 254a. Furthermore, the first distal portion 254 comprises a fourth portion 254d arranged on an opposite side of the connecting leg 264 compared to the second portion 254b, the fourth portion 254d being mirrored but otherwise identical to the second portion 254b. However, according to at least one example embodiment, the fourth portion 254d is designed slightly different compared to the second portion 254b.

The second distal portion 255 is in Figs. 5a-5b identical, or at least very similar to the first distal portion 254. Hence, the second distal portion 255 comprises corresponding first and third portions 255a, 255c having a varying height and being arranged on opposite sides to each other of the second connecting leg 265, and second and fourth portions 255b, 255d being arranged as steps 255b, 255d and being arranged on opposite sides to each other of the second connecting leg 265.

It should be noted that the portion of the valve plug 244 facing the fluid from the fluid inlet 224, typically a side of the valve plug 244 facing opposite to the proximal chamber surface 232, may be referred to as a controlling portion 245 of the valve plug 244.

Thus, the first flow-through section 280 may either be defined by a portion of the valve plug 244 (such as a portion of the controlling portion 245 of the valve plug 242) the first portion 254a of the first distal portion 254, and the third portion 255c of the second distal portion 255, if the valve plug 244 is arranged as in Fig. 4a and Fig. 4a, or by a portion of the valve plug 244 (such as a portion of the controlling portion 245 of the valve plug 242), the first and second portions 254a, 254b of the first distal portion 254, and the third and fourth portions 254c, 254d of the second distal portion 255, if the valve plug 244 is arranged as in Fig. 4b.

It should be noted that the valve plug 244 may be positioned in various positions inside the valve insert 250. In a closed state, the valve plug 244 is arranged in a closed position wherein it is resting against the valve seat 246 and no fluid, or only a leakage flow, is allowed to flow through the chamber 230 via the valve insert 250. Hence, according to at least one example embodiment, the valve plug 244 may be positioned in a sealing contact with the valve seat 246. In the first open state, the valve plug 244 is arranged in a first open position where the valve plug 244 is distant from the valve seat 246 and fluid is allowed to flow through the chamber 230 via the valve insert 250. Furthermore, for the valve 201 shown in Figs. 4a-4b, the valve plug 244 may be arranged in a second open position in which the valve plug 244 is less distant from the valve seat 246 compared to when the valve plug 244 is arranged in its first open position (that is, when the closing arrangement 240 is in its second open state).

The second open position of the valve plug 244 is defined as when the controlling portion 245 of the valve plug 244 is positioned at the same z-coordinate as an intersection 290 (indicated in Fig. 5a) between the first and second portions 254a, 254b of the first distal portion 254 (which for the valve insert 250 in Figs. 4a-4b and Figs. 5a-5b is at the same z-coordinate as an intersection between the first and second portions 255a, 255b of the second distal portion 255, and an intersection between the third and fourth portions 254c, 254d, 255c, 255d of the first and second distal portions 254, 255).

In Fig. 4a, the valve plug 244 is arranged between its closed position and its second open position. Hence, the first flow-through section 280 is here defined by a portion of the valve plug 244 (such as a portion of the controlling portion 245 of the valve plug 244), the first portion 254a of the first distal portion 254, and the third portion 254c of the second distal portion 255, and fluid is allowed to flow through the first flow-through section 280. Similarly, but not shown in Fig. 4a as it is hidden behind the first and second distal portions 254, 255, the second flow-through section 282 is defined by a portion of the valve plug 242 (such as a portion of the controlling portion 245 of the valve plug 244), the first portion 255a of the second distal portion 255, and the third portion 254c of the first distal portion 254, and fluid is allowed to flow through the second flow-through section 282, see Fig. 5b illustrating the second flow-through section 282.

When the valve plug 244 is arranged between its closed position and its second open position, the first and the second flow-through sections 280, 282 are at least partly defined by the first and third portions 254a, 255c by the first distal portion 254 and the second distal portion 255 respectively, a change of the valve plug 244 anywhere between its closed position and its second open position will result in a change of cross sectional area of the flow-through sections 280, 282, and hence a change in fluid flow through the first and second flow-through sections 280, 282 in accordance with a first valve characteristic function. The first valve characteristic function is characterised at least by the shape of the first and third portions 254a, 255c and specifically by their inclined or bevelled shape, i.e. the varying height of the first and third portions 254a, 255c of the first distal portion 254 and the second distal portion 255 respectively. Hence, two subsequent positional changes of the same size and in the same direction (i.e. in the same z-direction) of the valve plug 244, anywhere between the closed position and the second open position, will result in two different changes of cross sectional area of the flow-through sections 280, 282, and hence two different changes in fluid flow through the first and second flow-through sections 280, 282. The two subsequently occurring different changes of the cross sectional area (and hence the fluid flow) will follow the first valve characteristic function. The change may e.g. be an increase or a decrease.

In other words, the first valve characteristic function is defined as a first function $f1(X)=Y$ wherein X is the distance of the valve plug 244 compared to the valve seat 246 (preferably the distance in the z-direction from the controlling portion 245 of the valve plug 244 and the valve seat 246). $X=0$ is defining the valve plug 244 in its closed position and Y is the cross sectional area of the flow-through sections, i.e. the combined cross sectional area of the first and second flow-through sections 280, 282.

In Fig. 4b, the valve plug 244 is arranged between its second open position and its first open position. Hence, the first flow-through section 280 is here defined by a plane extending between a portion of the valve plug 244 (such as a portion of the controlling portion 245 of the valve plug 244), the first and second portions 254a, 254b of the first distal portion 254, and the third and fourth portions 255c, 255d of the second distal portion 255, and fluid is allowed to flow through the first flow-through section 280. Similarly, but not shown in Fig. 4b as it is hidden behind the first and second distal portions 254, 255, the second flow-through section 282 is defined by a plane extending between a portion of the valve plug 244 (such as a portion of the controlling portion 245 of the valve plug 244), the first and second portions 255a, 255b of the second distal portion 255, and the third and fourth portions 254c, 254d of the first distal portion 254, and fluid is allowed to flow through the second flow-through section 282.

As the first and the second flow-through sections in Fig. 4b are defined at least by the first, second, third and fourth portions 254a-D, 255a-D by the first and second distal portions 254, 255, a change of the valve plug 244 anywhere between its second open position and its first open position will result in a change of cross sectional area of the flow-through sections, and hence a change in fluid flow through the first and second flow-through sections, in accordance with a second valve characteristic function being different to the first valve characteristic function. The second valve characteristic function is characterised at least by the shape of the second portions 254b, 255b and the fourth portions 254d, 255d of the first and second distal portions 254, 255 respectively, and specifically by their step-shaped configuration. Hence, two subsequent positional changes of the same size and in the same direction (i.e. in the same z-direction) of the valve plug 244, anywhere between the second open position and the first open position, will result in two equal (or substantially equal) increases or decreases (depending on direction of the valve plug motion) of the cross sectional area of the flow-through sections 280, 282 and fluid flow through the first and second flow-through sections 280, 282. The two subsequently occurring different increases or decrease of the cross sectional area of the flow-through sections 280, 282 (as well as the increase or decrease of fluid flow) will follow the second valve characteristic function.

In other words, the second valve characteristic function may be defined as a second function $f2(X)=Y$ wherein X is the distance of the valve plug 244 compared to the valve seat 246 (preferably the distance in the z-direction from the controlling portion 245 of the valve plug 244 and the valve seat 246). $X=0$ is defining the valve plug 244 in its closed position and Y is the combined cross sectional area of the first and the second flow-through sections 280, 282.

According to at least one example embodiment, the derivate of the first function $df1(X)/dY$ is different compared to the derivate of the second function $df2(X)/dY$ over at least a majority of distance X. According to at least one example embodiment, the derivate of the second function $df2(X)/dY$ is greater compared to the derivate of the first function $df1(X)/dY$. For example, the first function $f1(X)=Y$ may be curved, and the second function $f2(X)=Y$ may be linear. The first function $f1(X)=Y$ may for example be defined by an EQM function:

$$Y\,[\%] = 100{*}a/(100/X{-}1{+}a)$$

with parameter a between 0.1 and 0.8 and X and Y as defined previously.

Hence the first and third portions 254a, 254c, 255a, 255c of the first and second distal portions 254, 255 may each be referred to as first characteristic controlling portions as the shape of these portions 254a, 254c, 255a, 255c at least partly defines the first valve characteristic function (i.e. when the valve plug 244 is changing its position anywhere between its closed position and its second open position). Correspondingly, the second and fourth portions 254b, 254d, 255b, 255d of the first and second distal portions 254, 255 may each be referred to as second characteristic controlling portions as the shape of these portions 254b, 254d, 255b, 255d at least partly defines the second valve characteristic function (i.e. when the valve plug 244 is changing its position anywhere between its second open position and its first open position).

It should be noted that the cross sectional area of the first flow-through section 280 may be described as a curved plane having an extension in the z, φ -directions (i.e. a plane located at a constant p) and extending between a portion of the controlling portion 245 of valve plug 244, and the first and third portions 254a, 255c of the first and second distal portions 254, 255 respectively, or the first and second portions 254a, 254b of the first distal portion 254 together with the third and fourth portions 255c, 255d of the second distal portion 255 (depending on the position of the valve plug 244) (the first gap 274 may, but do not have to, be comprised in the first flow-through section 280 according to one example embodiment, for such embodiment the first flow-through section 280 extends to the distal chamber surface 232, correspondingly, the second gap 275 may, but do not have to, be comprised in the second flow-through section 282 according to one example embodiment, for such embodiment the second flow-through section 282 extends to the distal chamber surface 232). Correspondingly, the cross sectional area of the second flow-through section 282 may be described as a curved plane having an extension in the z, φ -directions (i.e. a plane located at a constant p) and extending between a portion of the controlling portion 245 of valve plug 244, and the first and third portions 255a, 254c of the second and first distal portions 255, 254 respectively, or the first and second portions 255a, 255b of the second distal portion 255 together with the third and fourth portions 254c, 254d of the first distal portion 254 (depending on the position of the valve plug 244). Thus, the flow through sections 280, 282 may also be referred to as flow through areas 280, 282 where the fluid is flowing through.

It should be noted that the valve insert 250 in Figs. 4a-4b and Figs. 5a-5b can be arranged in a valve where the fluid flow from the fluid inlet 224 is entering the chamber 230 by flowing radially internally of the distal portions 254, 255, and further outside of the valve insert 250 via the two flow-through sections 280, 282. However, according to at least one example embodiment, the valve insert 250 of Figs. 4a-4b and Figs. 5a-5b is installed in a valve where the fluid flow is allowed to flow from outside of the valve insert 250 to the inside of the valve insert 250.

The first open position of the valve plug 244 may be a fully open position of the valve plug, e.g. if the valve insert 250 provides the function of only two different valve characteristic functions. However, according to at least one example embodiment, the valve insert 250 is arranged to provide more than two valve characteristic functions, e.g. by having more portions shaped differently compared to a neighbouring portion. In such cases, the first open position of the valve plug 244 may be different from the fully open position of the valve plug 244, and the valve plug 244 may be positioned in at least a third open position in where the valve plug 244 is arranged closer to the proximal chamber surface 232 compared to when it is in its first open position. The third open position of the valve plug 244 may be, but do not have to be, the fully open position of the valve plug, 244. To clarify, in embodiments where there is at least a third open position, the first open position will be positioned between the second open position and the third open position.

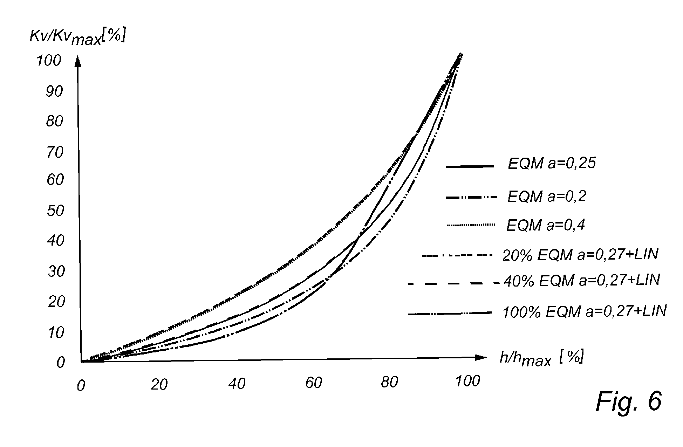

By having a valve providing two valve characteristic functions, for example by providing a valve insert 250 as discussed above with reference to Figs. 4a-4b, and Figs. 5a-5b, the drawbacks mentioned in relation to the valve characteristic in Fig. 3 may be overcome, or at least be reduced. Fig. 6 shows a graph illustrating a control valve having two different valve characteristic functions.

In Fig. 6 the x-axis has be normalized with regards to the position of the closing member (i.e. corresponding to e.g. the lift limitation). That is, the x-axis in the represents X/Xmax where X is the position of the closing member and Xmax is the position of the closing member corresponding to a fully open valve (restricted or non-restricted), i.e. with maximum opening degree (for a valve having a valve plug which can be lift limited that is corresponding to either the maximum limited lift, as for the first and second dashed curves, or the maximum possible lift as for the first dash dotted curve). Correspondingly, the y-axis in the graph of Fig. 6 represents Y/Ymax where Y is the cross sectional area of the flow-through section(s) and Ymax is the respective cross section area of the flow-through section(s) when the valve is fully open (i.e. at its maximum opening degree, restricted or non-restricted). Correspondingly, Y/Ymax can be replaced with Kv/Kvmax where Kv is valve capacity and Kvmax is the respective maximum valve capacity

The first dash dotted curve (100% EQM a=0.27+LIN) in Fig. 6 represent a valve characteristic for a control valve having no lift limitation, the first dashed curve (40% EQM a=0.27+LIN) represents a valve characteristic for the same control valve having a lift limitation of 40 %, and the second dashed curve (20% EQM a=0.27+LIN) represents a valve characteristic for the same control valve having a lift limitation of 20 %. Furthermore, in Fig. 6, a second dash dotted curve (EQM a=0.2) being defined by the EQM function and having parameter a=0.2, a dotted curve (EQM a=0.4) being defined by the EQM function and having parameter a=0.4, and a solid line curve being defined by the EQM function and having parameter a=0.25 are shown. Optimally, the valve characteristic follows the solid line curve (i.e. be as close to an EQM function with parameter a=0.25). However, as discussed with reference to Fig. 3, this is hard to achieve for a control valve covering different degrees of restrictions of the closing member, such as e.g. different degrees of lift limitations, and therefore the valve characteristic should preferably be within the second dash dotted curve and the dotted curve, or at least lie close to these curves.

As seen in the graph, the first dash dotted curve changes its behaviour at around 70 % of the X/Xmax. Thus, the first dash dotted curve represents a control valve having a first valve characteristic function defined by a first function f1(X)=Y from 0 to about 70 % of X/Xmax, and a second valve characteristic function defined by a second function f2(X)=Y from around 70 % to 100 % of X/Xmax. The first function f1(X)=Y is here defined by an EQM characteristic with the parameter a=0.27, and the second function f2(X)=Y is linear. As shown in Fig. 6, the first dash dotted curve is somewhat below the desired solid line curve and is even somewhat below the second dash dotted curve, in the portion of the first dash dotted curve being defined by the first function f1 (X)=Y. Furthermore, the first dash dotted curve is somewhat above the solid line curve but within the dotted curve, in the portion of the first dash dotted curve being defined by the second function f2(X)=Y. Thus, the control valve having a valve characteristic corresponding to the first dash dotted curve may be considered to be good enough.

As the control valve is subject to a lift limitation (the first dashed and the second dashed curves), the behaviour of the valve will change, as the first portion of the valve characteristic of the control valve having no lift limitation (the first dash dotted curve) will be become more determining. Thus, the first dashed curve representing the valve characteristic for a control valve having a 40 % lift limitation is following the desired solid line curve very well. Hence, by performing a 40 % lift limitation of the control valve having the valve characteristic as represented by the first dash dotted curve, the thereby modified valve characteristic (i.e. the first dashed curve) will closely follow the desired solid line curve, i.e. the curve being defined by an EQM function with parameter a=0.25. If the control valve is further lift limited to 20 %, which is in Fig. 6 represented by the second dashed curve, the thereby modified valve characteristic will closely follow the dotted curve. Thus, the control valve having a valve characteristic corresponding to the first dash dotted curve (not being subject to a lift limitation) may be considered to be good enough even if the control valve is lift limited to 40 % or even 20 %. By carrying out a lift limitation of a control valve having a valve characteristics as the first dash dotted curve, the resulting or modified valve characteristic of the lift limited valve may according to one example embodiment only operate according to the first characteristic valve function, or only according to a part of the first characteristic valve function.

In other words, by providing a control valve having a valve characteristic being defined by at least two different valve characteristic functions, the control valve can be used with different lift limitation (or no lift limitation) and still provide a good enough valve characteristic.

It should be understood that the inventive concept is not limited to the described exemplary embodiments; rather the scope being generally defined by the accompanying claims. For example the valve 201 of Figs. 4a-4b may according to at least one example embodiment comprise a differential pressure valve part (not shown) arranged upstream of the fluid inlet 224. In such embodiment, the closing arrangement 240 of valve 201 in Figs. 4a-4b may be referred to as a control valve closing arrangement 240. The differential pressure valve part may limit the differential pressure to which the control valve part is exposed. Therefore, the operating conditions for the control valve part may be maintained at an adequate level despite variations of the pressure level in the entire fluid distribution system in where the valve is installed. The differential pressure valve part may also be comprised in a separate valve body (not shown). Furthermore, as already mentioned, the valve may no comprise a valve rod and valve plug which is subject to lift limitation, but the inventive concept may as well be applied to e.g. a rotational valve or a ball valve. In such cases, the lift limitation and the x-axis in the above graphs showing valve characteristic are substituted with the corresponding parameters of the rotational or ball valve.

**Claims**

1.  A control valve comprising:

a valve body, a chamber arranged inside said valve body, a fluid inlet for providing fluid to said chamber, and a fluid outlet for receiving fluid from said chamber, and a closing arrangement for regulating the flow of fluid from said fluid inlet to said fluid outlet via said chamber,
said closing arrangement having a closed state in which no fluid, or only a leakage flow, is allowed to flow through said chamber, a first open state in which fluid is allowed to flow through said chamber, and at least one second open state in which a lower flow of fluid is allowed to flow through said chamber compared to when said closing arrangement is in its first open state, wherein
between said closed state and said second open state, said closing arrangement is configured to allow fluid to flow through said chamber in accordance with a first valve characteristic function, and

between said second open state and said first open state, said closing arrangement is configured to allow fluid to flow through said chamber in accordance with a second valve characteristic function being different compared to said first valve characteristic function.

2. A control valve according to claim 1, wherein said closing arrangement comprises a closing member and a closing member receiving means having at least a closing member receiving portion, wherein said closing member is adapted to be moved away from said closing member receiving portion thereby providing a flow-through section through which fluid is allowed to flow, wherein, in said closed state, said closing member is arranged in a closed position in which said closing member is in sealing contact with said closing member receiving portion in order to allow no fluid, or only a leakage flow, to flow via said closing arrangement, and in said first open state, said closing member is arranged in a first open position in which said closing member is distant from said closing member receiving portion, and in said second open state, said closing member is arranged in a second open position in which closing member is less distant from said closing member receiving portion compared to when said closing member is in its first open position.

3. A control valve according to claim 2, wherein said first valve characteristic function is defined as a first function f1 (X)=Y and wherein said second valve characteristic function is defined as a second function f2(X)=Y, wherein X is the position of said closing member compared to said closing member receiving portion, and Y is the cross sectional area of said flow-through section, and wherein the derivate of said first function df1 (X)/dY is different compared to the derivate of said second function df2(X)/dY over at least a majority of distance X.

4. A control valve according to claim 3, wherein the derivate of said second function df2(X)/dY is greater compared to the derivate of said first function df1 (X)/dY over at least a majority of distance X.

5. A control valve according to any one of claims 3-4, wherein said second function is linear.

6. A control valve according to any one of claims 3-5, wherein said first function is curved e.g. by being defined by an EQM function.

7. A control valve according to any one of the preceding claims when being dependent on claim 2, wherein said closing member is a valve plug connected to a valve rod, and said closing member receiving portion is a valve seat adapted to receive said valve plug and be in sealingly contact with said valve plug when said valve plug is in said closed position in order to allow no fluid, or only a leakage flow, to flow via said closing arrangement.

8. A control valve according to claim 7, wherein said first valve characteristic function and said second valve characteristic function are defined by the shape of the closing arrangement.

9. A control valve according to claim 8, wherein said valve plug is arranged to be guided inside at least a part of said chamber, and wherein said valve plug comprises a controlling portion, said controlling portion being arranged to control fluid flow through said flow-through section.

10. A control valve according to any one of claims 7-9, wherein said chamber comprises a proximal chamber surface and a distal chamber surface being opposite to said proximal chamber surface, and said closing member receiving means further comprises a valve insert arranged at least partly inside said chamber, said valve insert comprising a proximal portion and at least two distal portions, wherein said valve plug is adapted to be guided through at least a part of said valve insert, and at least one of said distal portions of said valve insert is resiliently arranged relative said proximal portion in order for the distal portions to be movable relative each other.

11. A control valve according to claim 10, wherein each one of said distal portions comprises a characteristic controlling portion having a varying height in a circumferential direction of said valve insert.

12. A valve according to claim 11, wherein said characteristic controlling portion is a first characteristic controlling portion, and each one of said distal portions comprises a second characteristic controlling portion formed as a step.

13. A control valve according to any one of claims 7-9, wherein said valve seat comprises a characteristic controlling portion having a varying height in a circumferential direction of said valve seat and wherein preferably said characteristic controlling portion is a first characteristic controlling portion, and said valve seat comprises a second characteristic controlling portion formed as a step.

14. A control valve according to any one of claims 11-12 or 13, when dependent on claim 3, wherein when said valve plug is positioned between its closed position and its second open position, said valve plug allows fluid flow through said chamber and through said valve insert over said first characteristic controlling portions, and wherein a change of said valve plug position anywhere between its closed position and its second position results in a change of fluid flow through said chamber in accordance with said first valve characteristic function.

15. A control valve according to claim 14, wherein when said valve plug is positioned between its second open position and its first open position, said valve plug allows fluid flow through said chamber over said first and said second characteristic controlling portions, and wherein a change of said valve plug position anywhere between its second open position and its first open position results in a change of fluid flow through said chamber in accordance with said second valve characteristic function.

*Fig. 1*

Fig. 2

*Fig. 3*

201

232
242
260
230
222
250
240
236
244
226
245
280
224
246
234

*Fig. 4A*

250

280

*Fig. 4B*

Fig. 5A

Fig. 5B

Fig. 6

Europäisches
Patentamt

European
Patent Office

Office européen
des brevets

# EUROPEAN SEARCH REPORT

Application Number

EP 15 19 1688

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP S59 144867 A (YAMATAKE HONEYWELL CO LTD) 20 August 1984 (1984-08-20) * figures * ----- | 1-15 | INV. F16K1/42 F16K1/54 F16K3/24 F16K3/34 |
| X | US 2002/017327 A1 (KAWAAI SHIGEHIRO [JP] ET AL) 14 February 2002 (2002-02-14) * figures 1, 4, 6, 8A-15, 18 * ----- | 1-9 | |

TECHNICAL FIELDS
SEARCHED     (IPC)

F16K

The present search report has been drawn up for all claims

| Place of search | Date of completion of the search | Examiner |
|---|---|---|
| The Hague | 12 April 2016 | Asensio Estrada, G |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 19 1688

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2016

| Patent document cited in search report | | Publication date | Patent family member(s) | | Publication date |
|---|---|---|---|---|---|
| JP S59144867 | A | 20-08-1984 | NONE | | |
| US 2002017327 | A1 | 14-02-2002 | CN | 1336500 A | 20-02-2002 |
| | | | CN | 1769751 A | 10-05-2006 |
| | | | US | 2002017327 A1 | 14-02-2002 |

EPO FORM P0459

For more details about this annex : see Official Journal of the European Patent Office, No. 12/82